# FASCICULE DE BREVET EUROPEEN

(11) **EP 4 587 929 B1**
(45) Date de publication et mention de la délivrance du brevet: **26.08.2026**
(21) Numéro de dépôt: 23793409.6
(22) Date de dépôt: 11.09.2023
(51) Int. Cl.: G06F 13/00, H01Q 1/24

(54) **DISPOSITIF ÉLECTRONIQUE PORTATIF COMPRENANT DES MOYENS MAGNÉTIQUES D'EMPILEMENT, NOTAMMENT PORTEFEUILLE MATÉRIEL POUR LE STOCKAGE À FROID DE CLÉS PRIVÉES**
TRAGBARES ELEKTRONISCHES GERÄT MIT MAGNETISCHEN STAPELMITTELN, INSBESONDERE HARDWARE-BÖRSE ZUR KALTVERWAHRUNG PRIVATER SCHLÜSSEL
PORTABLE ELECTRONIC DEVICE COMPRISING MAGNETIC STACKING MEANS, IN PARTICULAR A HARDWARE WALLET FOR THE COLD STORAGE OF PRIVATE KEYS

(30) Priorité: 16.09.2022 FR 2209380; 16.09.2022 FR 2209381; 16.09.2022 FR 2209382; 16.09.2022 FR 2209384; 16.09.2022 FR 2209385
(43) Date de publication de la demande: 23.07.2025
(73) Titulaire: LEDGER, 75003 Paris (FR)
(72) Inventeur: FADELL, Anthony Michael, 75002 Paris (FR); LAUDER, Andrew David, Oxford Oxfordshire OX3 7PG (GB); TUPMAN, David John, Huntington Beach, California, California (US); HUBERT, Benjamin, LONDON (GB); DALE-BROWN, Jake, Leicestershire LE6 0FA (GB)
(74) Mandataire: Marchand, André
(86) Numéro de dépôt international: PCT/FR2023/051378
(87) Numéro de publication internationale: WO 2024/056965

(56) Documents cités:
- US-A1- 2019 307 002
- US-B2- 8 381 994
- US-B2- 9 785 187

## Description

### Domaine Technique

La présente invention concerne les portefeuilles matériels pour le stockage à froid de clés privées issues de la blockchain. La présente invention concerne également l'ergonomie des dispositifs électroniques portatifs, et notamment l'ergonomie de portefeuilles matériels de stockage à froid de clés privées.

### Arrière-plan

Ces dernières années, le développement des cryptomonnaies ou autres types de cryptoactifs gérés par la blockchain, tels que les jetons non fongibles («NFT») et les contrats intelligents («Smart Contracts»), a donné naissance à divers moyens de stockage et de conservation des clés privées attachées à ces différents types de cryptoactifs. C'est ainsi que sont apparues les notions de «portefeuille», de «stockage à froid» et de stockage «à chaud» de clés privées. Un «portefeuille», appelé aussi «porte-monnaie», est un appareil ou un programme dont la fonction est de gérer des cryptoactifs, et donc de stocker les clés privées qui y sont attachées. Les portefeuilles dits «chauds» («hot wallets») sont connectés à Internet et susceptibles d'attaques de pirates ou d'exposition à des virus et malwares. Il peut s'agir de portefeuilles gérés par des plateformes d'échange centralisé, qui n'offrent pas le plus haut niveau de sécurité. Ainsi, de nombreuses plateformes centralisées ont été pillées de centaines de millions de dollars par des pirates au fil des ans. Les portefeuilles «chauds» peuvent aussi prendre la forme de programmes installés sur des téléphones mobiles, tablettes ou ordinateurs personnels («software wallets»). De tels portefeuilles sont en permanence connectés à Internet et donc eux-mêmes susceptibles d'attaques.

Les portefeuilles froids («cold wallets») constituent la solution la plus sûre pour le stockage à froid («cold storage») de clés privées, c'est-à-dire hors de tout accès direct à Internet, ce qui réduit la surface d'attaque et donc le risque de vol par piratage informatique. Les transactions mettant en jeu des clés privées sont signées dans un environnement hors ligne. Toute transaction initiée en ligne est temporairement transférée vers le portefeuille matériel hors ligne, où elle est ensuite signée numériquement avant d'être transmise au réseau en ligne. Comme la clé privée n'est pas communiquée au serveur en ligne pendant le processus de signature, un pirate informatique ne peut pas y accéder.

La forme la plus simple de stockage à froid est le portefeuille papier. Un portefeuille papier est un document sur lequel sont inscrites des clés publiques et privées de l'utilisateur. Le document comporte généralement un code QR intégré qui peut ensuite être scanné pour signer une transaction. L'inconvénient de ce support est que si le portefeuille papier est perdu, illisible ou détruit, l'utilisateur ne peut plus accéder à ses fonds.

Les portefeuilles ou portes-monnaies matériels appelés «hardware wallets» constituent une alternative pratique aux portefeuilles papier pour stocker des clés privées. De plus, ils sont généralement configurés pour générer des phrases de récupération («recovery phrases») permettant de restaurer les clés privées s'ils sont perdus. Rappelons que les cryptoactifs ne sont jamais stockés dans un porte-monnaie matériel, mais se trouvent enregistrés sur la blockchain. Le porte-monnaie matériel ne fait que stocker des clés privées permettant de gérer les transactions sur la blockchain. Des clés publiques correspondant aux clés privées pointent vers une adresse sur la blockchain où se trouvent réellement les actifs.

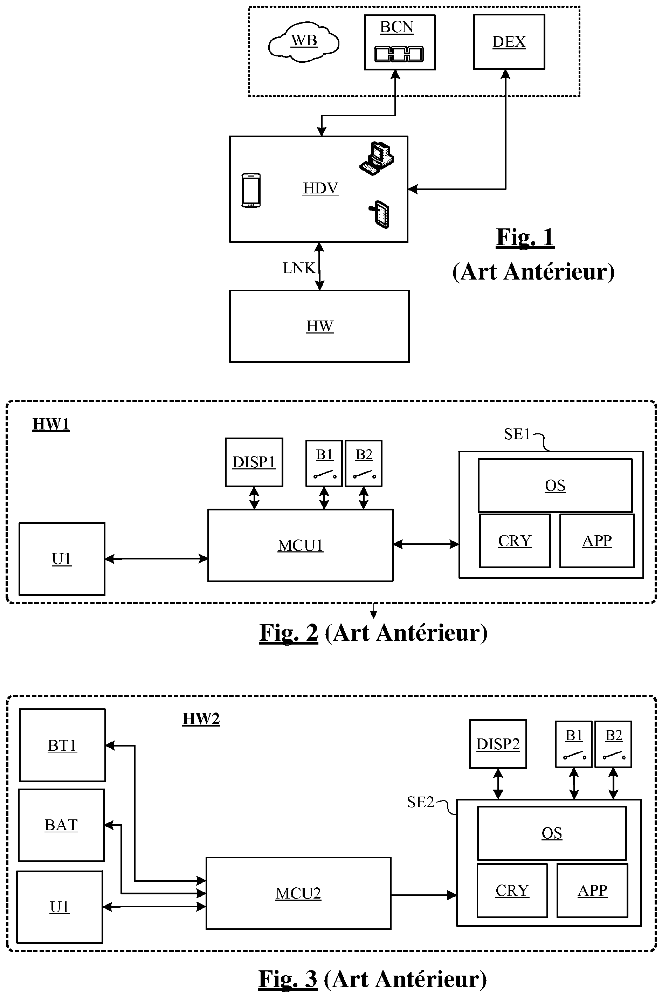

Comme montré sur la figure 1, un portefeuille matériel HW n'est jamais directement connecté à Internet. Pour être utilisable, le portefeuille matériel HW doit être relié à un dispositif hôte HDV au moyen d'une liaison de données LNK, par exemple USB ou Bluetooth. Le dispositif hôte HDV peut être un ordinateur, un téléphone mobile ou une tablette, et exécute un logiciel dit «compagnon» permettant de conduire des transactions sur la blockchain BCN, tel que le logiciel «Ledger live» développé par la demanderesse. Alternativement, le portefeuille matériel HW peut être utilisé, par l'intermédiaire du dispositif hôte HDV, avec des plateformes d'échange décentralisées ou «DEX», sur lesquelles l'utilisateur peut réaliser des transactions tout en conservant ses clés.

Les portefeuilles matériels HW commercialisés par la demanderesse ont connu un important succès commercial en raison du haut degré de sécurité qu'ils offrent, grâce à l'utilisation d'un élément sécurisé ou «secure element» pour conserver les clés privées et signer les transactions. Un élément sécurisé est une plateforme matérielle capable de stocker et de manipuler des données en conformité avec les règles et les exigences de sécurité fixées par une autorité de confiance. Il se présente sous la forme d'une puce de semiconducteur mettant en œuvre diverses contre-mesures visant à contrer des attaques de fraudeurs.

La figure 2 montre l'architecture d'un portefeuille matériel HW1 du type commercialisé par la demanderesse sous l'appellation «Nano S». Le portefeuille matériel HW1 comporte un élément sécurisé SE1 associé à un microcontrôleur MCU1. Le processeur MCU1 comporte une interface USB U1 et agit comme un dispositif proxy à l'égard de l'élément sécurisé SE1, pour la communication avec un dispositif hôte externe HDV exécutant une application compagnon (Cf. Fig. 1). L'élément sécurisé SE1 possède son propre système d'exploitation OS sécurisé (micrologiciel) lui permettant d'exécuter des programmes d'application APP, et intègre un coprocesseur cryptographique CRY. Le portefeuille matériel HW1 comporte également un afficheur DISP1 et deux boutons B1, B2.

L'afficheur DISP1 et les boutons B1, B2 sont gérés par le microcontrôleur MCU1. Ces deux boutons jouent un rôle important dans la sécurisation de certaines opérations : l'utilisateur doit appuyer en même temps sur les deux boutons afin de manifester son accord ou consentement pour la réalisation ou la finalisation de ces opérations.

La figure 3 illustre une deuxième architecture de portefeuille matériel HW2 du type commercialisé par la demanderesse sous l'appellation «Nano X», décrit plus en détail dans la notice d'information sur la sécurité «Ledger Nano X Security Target» publiée sur le site de l'Agence nationale de la sécurité des systèmes d'information (ANSSI).
(https://www.ssi.gouv.fr/uploads/2019/10/anssi-cible-cspn-2019_12en.pdf)

Le portefeuille matériel HW2 comporte, comme le portefeuille HW1, un élément sécurisé SE2, un microcontrôleur MCU2 équipé d'une interface USB U1, un écran DISP2 et deux boutons B1, B2. Il comporte en outre une batterie BAT rechargeable via l'interface USB et une interface de communication Bluetooth BT1 gérée par le microcontrôleur.

Comme précédemment, l'utilisateur doit appuyer en même temps sur les deux boutons afin de manifester son accord ou consentement lors la réalisation de certaines opérations sensibles, comme indiqué dans le document précité "Ledger Nano X Security Target", paragraphe 1.2 «Terminology», ligne «Consent» : "Le concept de sécurité du Ledger Nano X est renforcé par l'utilisateur final. Dès qu'une opération sensible est requise, l'utilisateur final doit confirmer l'opération à l'aide des deux boutons ".

A la différence du portefeuille matériel HW1, l'écran DISP2 et les boutons B1, B2 du portefeuille matériel HW2 sont gérés directement par l'élément sécurisé SE2, ce qui apporte un degré de sécurité supplémentaire en cas de corruption du microcontrôleur MCU2. Ainsi, les signaux reçus par l'élément sécurisé SE2, indiquant que l'utilisateur exerce en même temps une pression sur les deux boutons B1, B2, ne peuvent être falsifiés par le microcontrôleur. De même, les informations présentées à l'utilisateur par l'écran DISP2, par exemple le montant d'une transaction devant être validé par l'utilisateur, ne peuvent être falsifiées.

En résumé, dans un portefeuille matériel pour le stockage à froid de clés privées au sens de la présente demande, le microcontrôleur associé à l'élément sécurisé n'exécute aucun programme d'application et a pour seule fonction de gérer des périphériques de communication, USB, Bluetooth, etc. ainsi que d'autres périphériques (batterie, chargeur de batterie, etc.). Tous les programmes d'application sont exécutés par l'élément sécurisé.

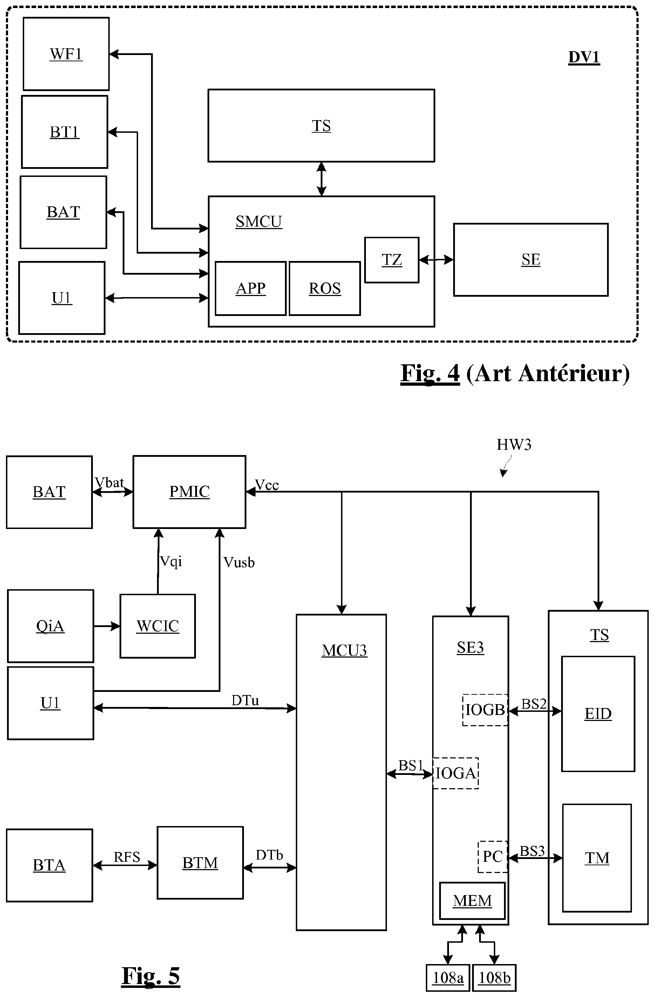

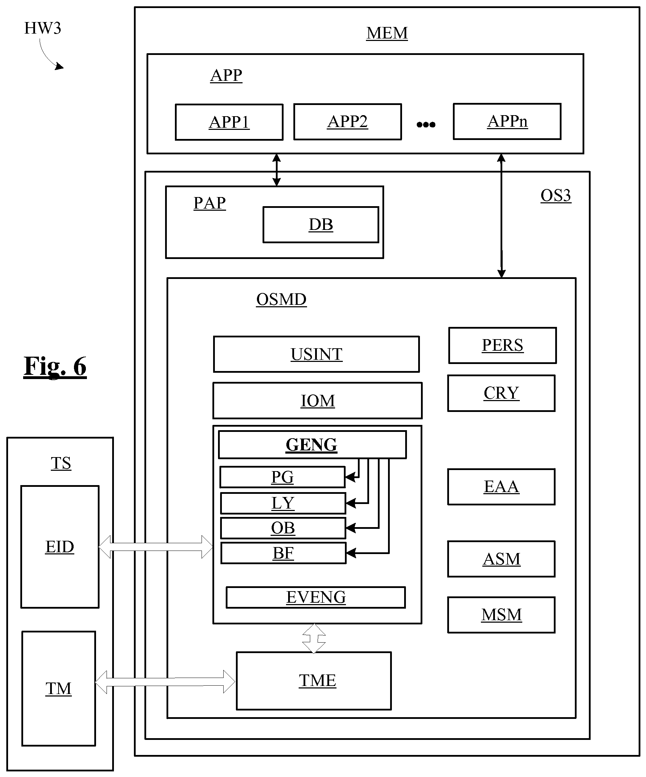

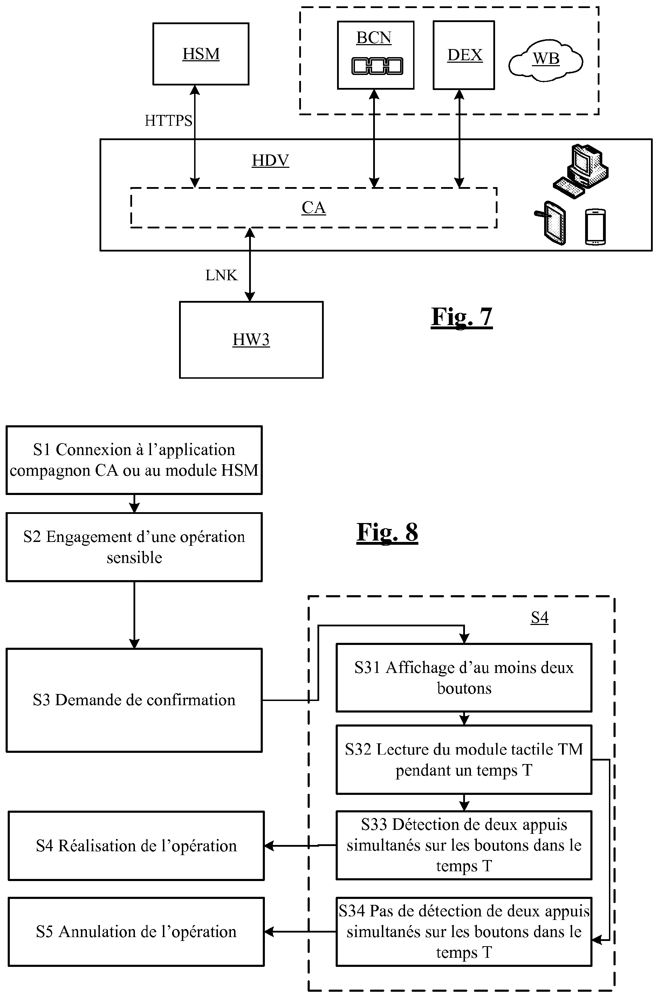

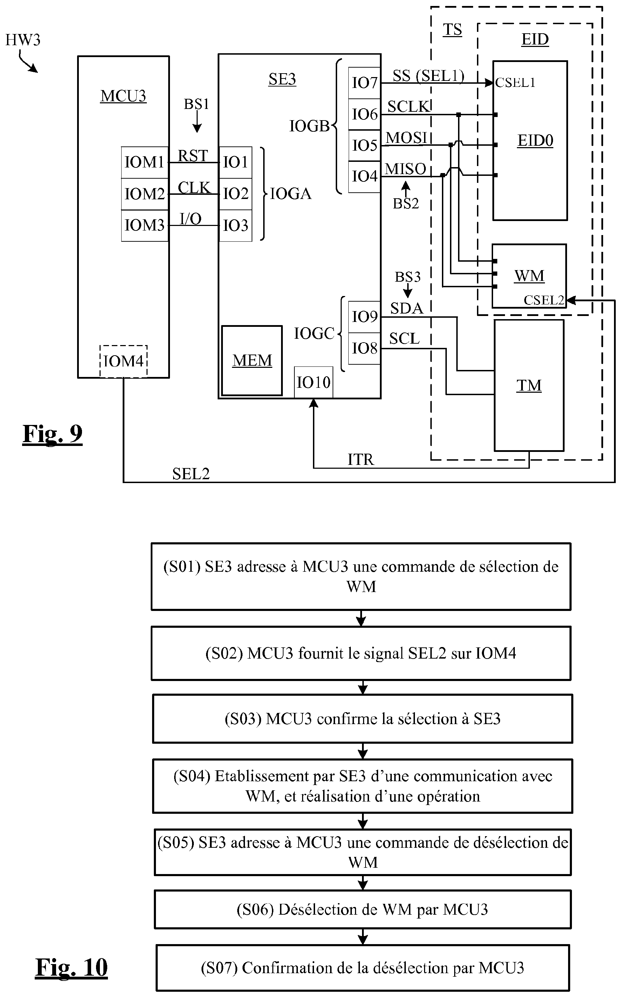

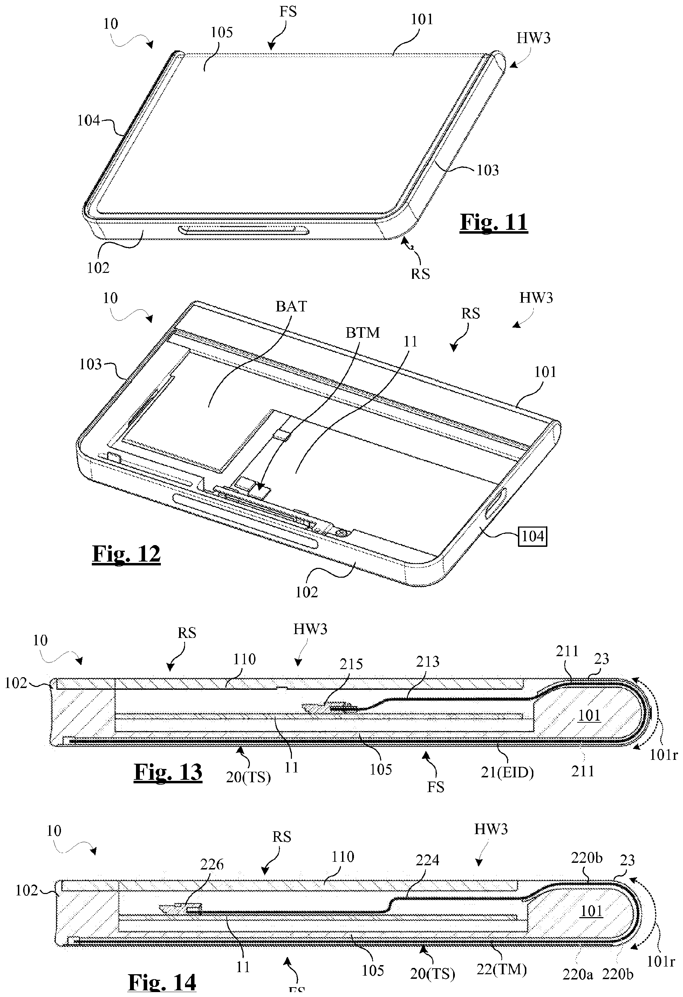

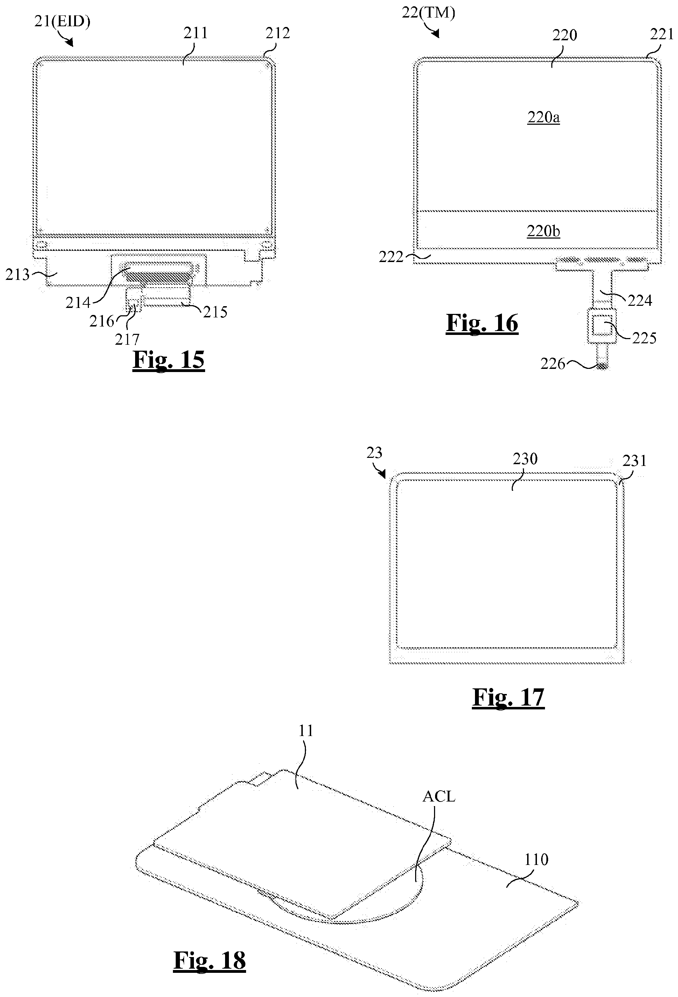

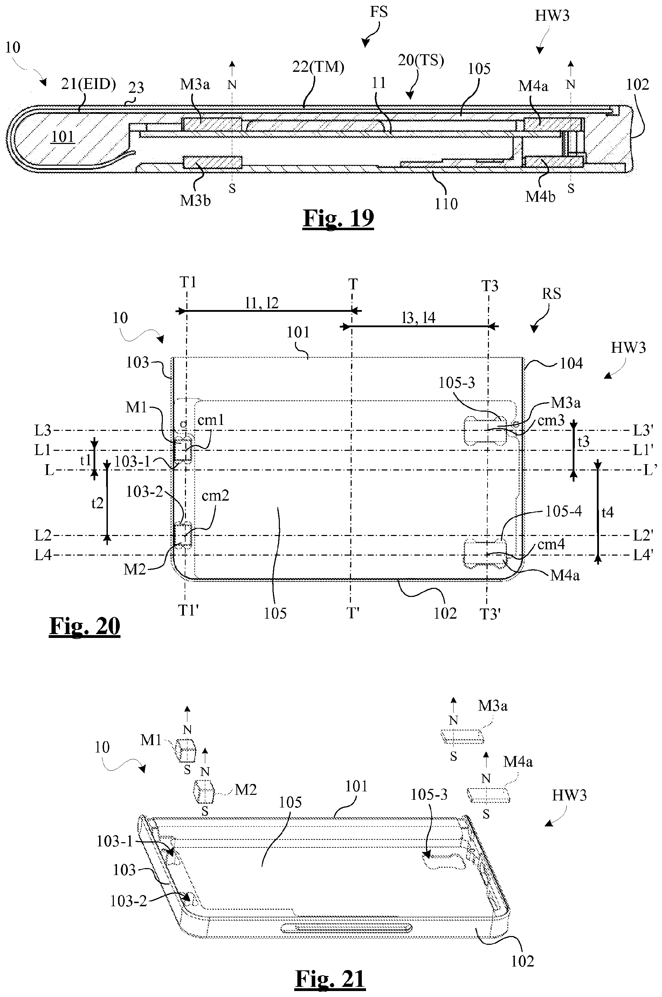

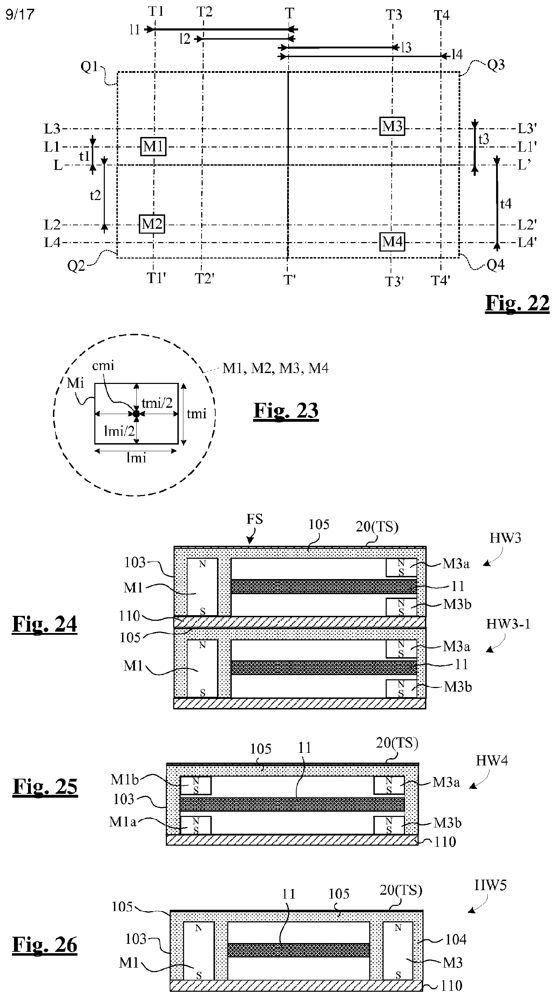

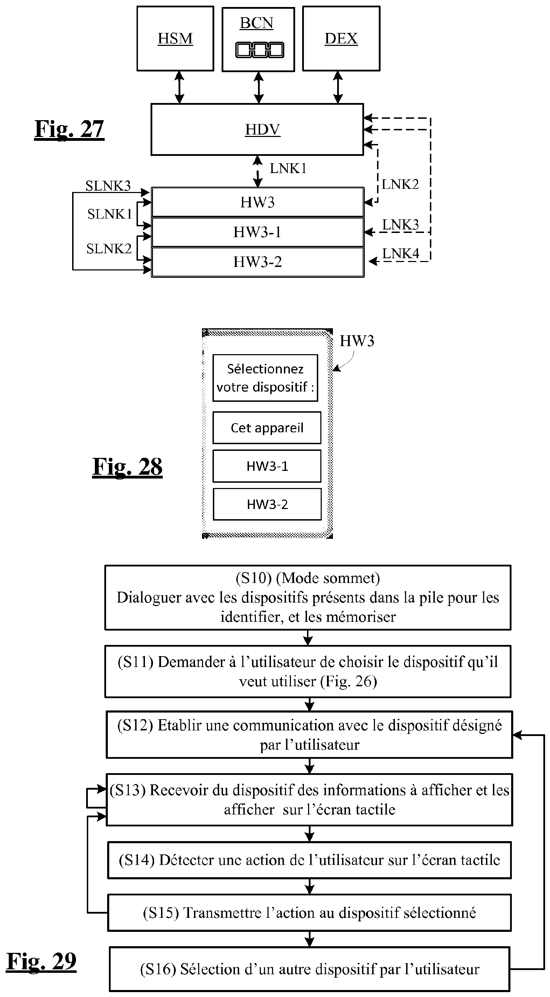

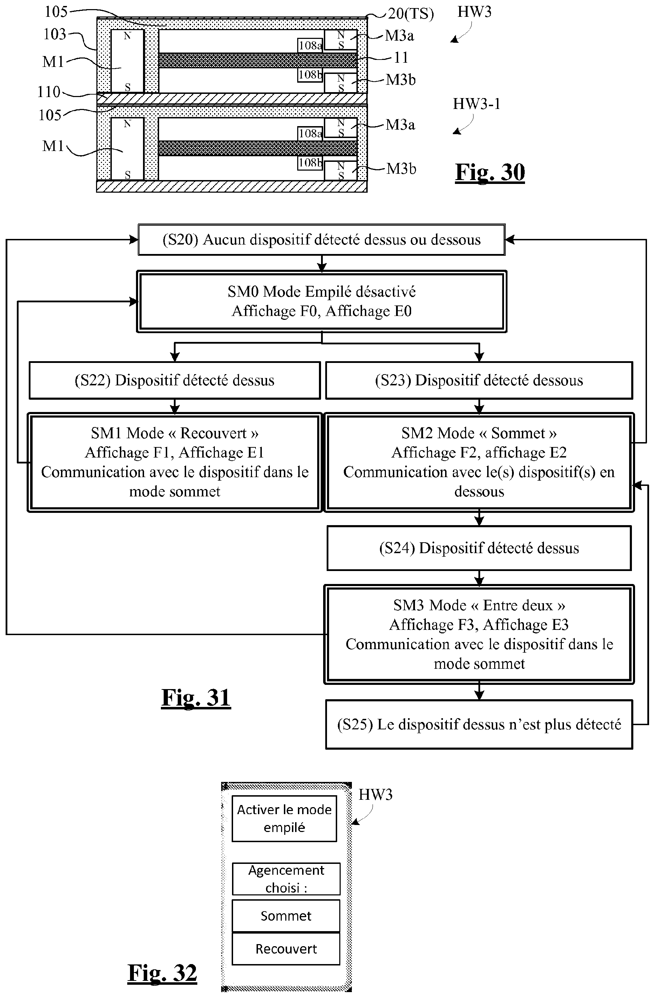

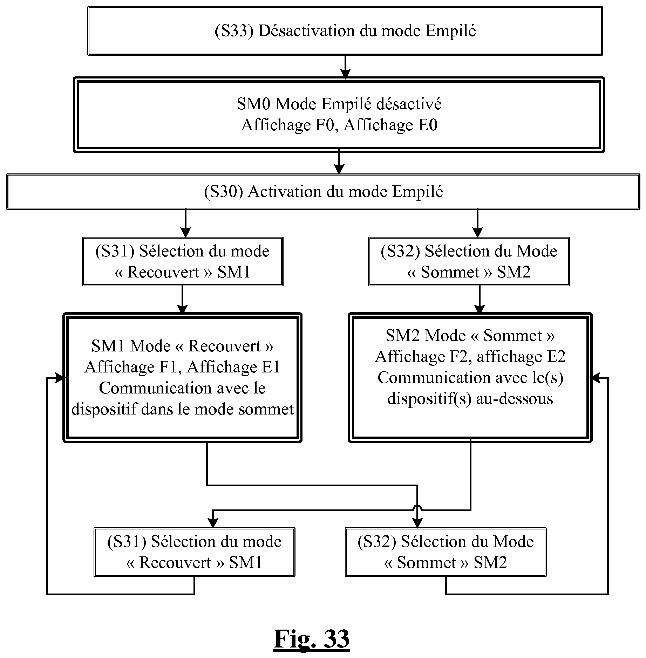

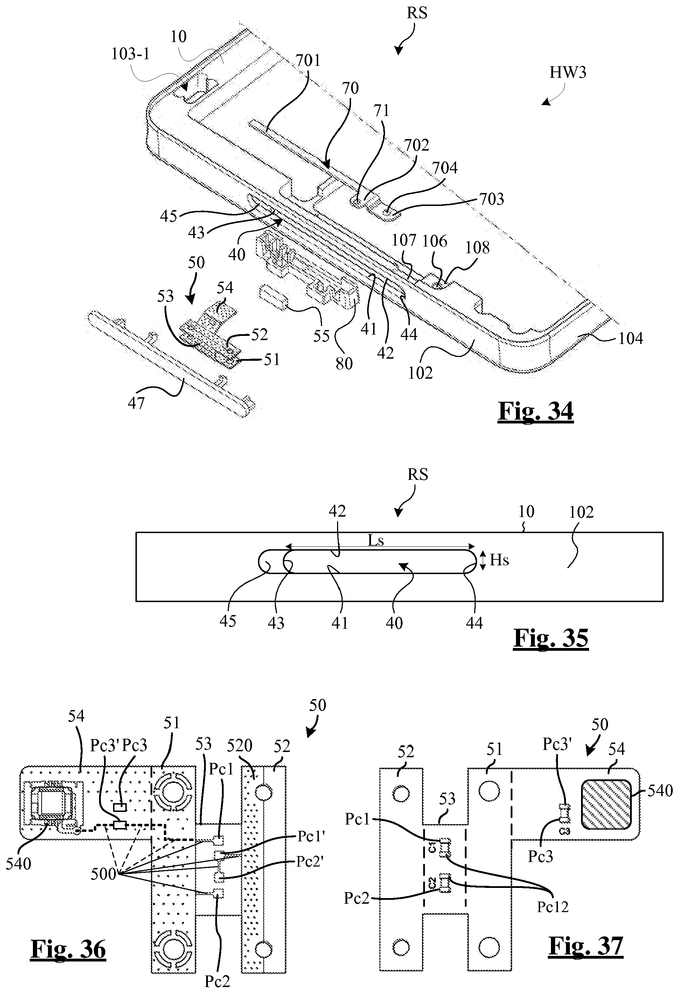

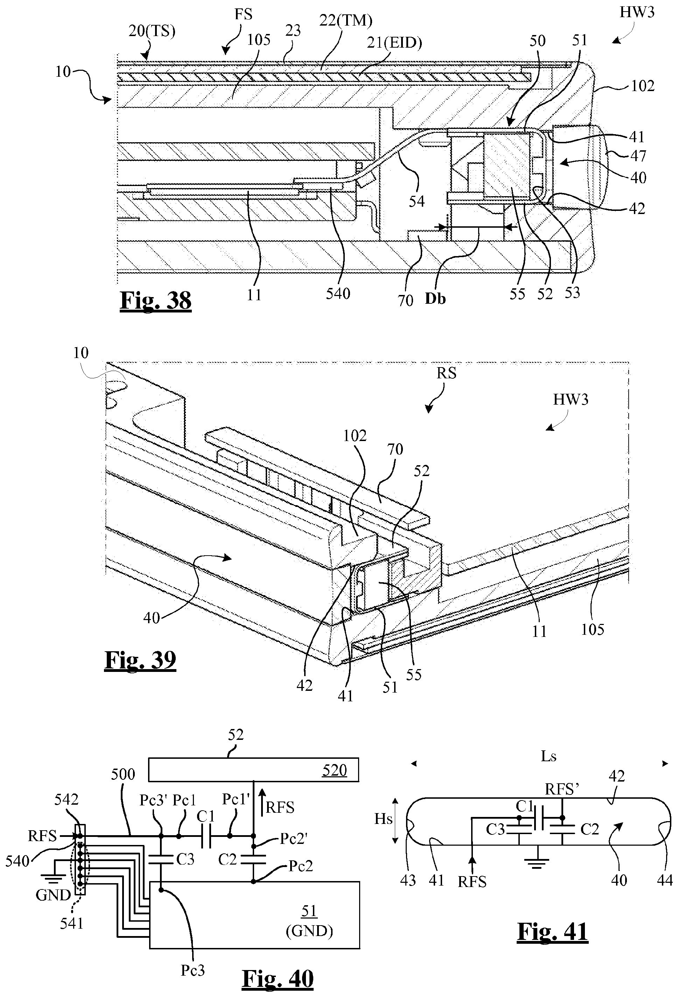

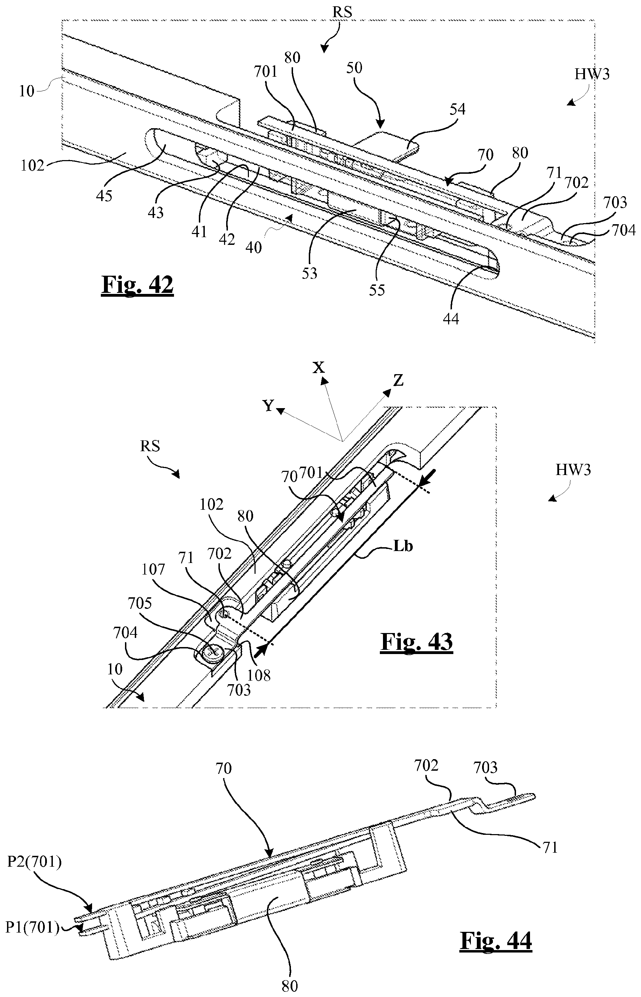

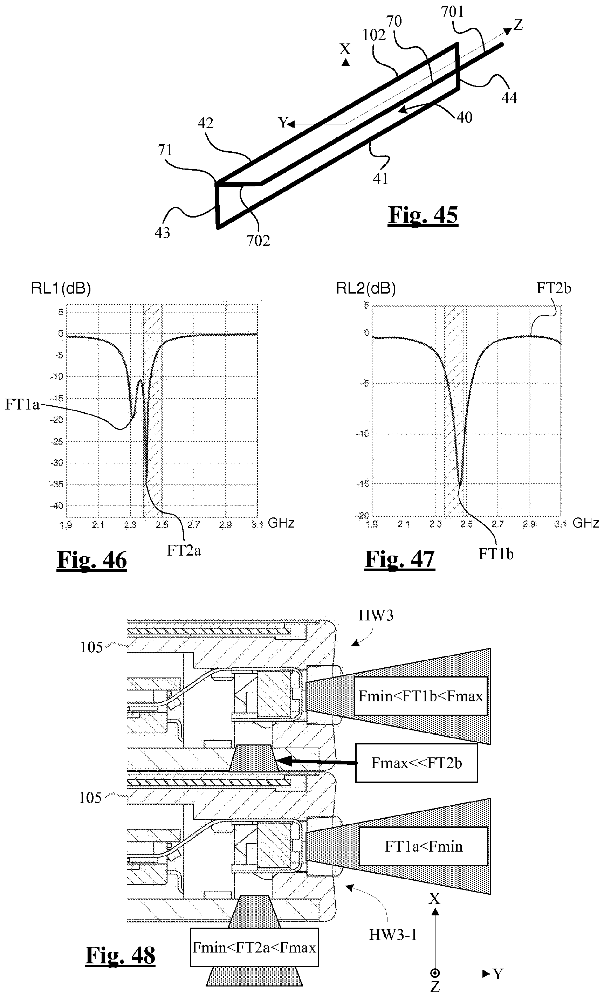

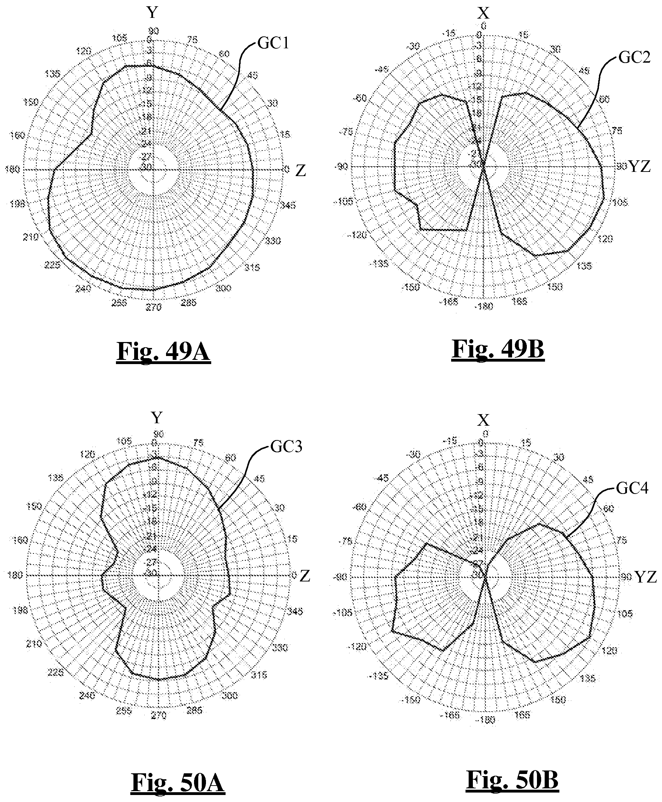

Il existe par ailleurs des dispositifs DV1 dont l'architecture classique est montrée sur la figure 4, qui comprennent un microcontrôleur SMCU incluant une zone de confiance TZ («Trust Zone»). La zone de confiance TZ peut dans certains cas être associée à un élément sécurisé SE auquel elle confie les opérations les plus sensibles ou le calcul cryptographique. La mise en œuvre d'une telle zone de confiance TZ se base généralement sur l'utilisation de deux processeurs virtuels associés à un contrôle d'accès matériel. Cela permet au cœur d'un programme d'application de basculer entre deux états, appelés «mondes», afin d'empêcher la fuite d'informations du monde le plus fiable vers le monde le moins fiable. Chaque monde peut fonctionner indépendamment de l'autre tout en utilisant le même noyau. La mémoire et les périphériques sont alors informés du monde d'exploitation du noyau et peuvent l'utiliser pour fournir un contrôle d'accès aux secrets et au code du dispositif. En général, le microcontrôleur SMCU exécute un système d'exploitation ROS dit «riche» dans le monde le moins fiable, et un code plus petit et spécialisé dans la sécurité dans le monde le plus fiable, afin de réduire la surface d'attaque. Le système d'exploitation riche est généralement Android.

Ce type de dispositif n'a pas besoin d'être relié à un dispositif hôte pour exécuter des opérations sur la blockchain, et contient généralement une interface de communication wifi WF1 en sus d'interfaces de communication USB U1 et Bluetooth BT1. Grâce à son système d'exploitation riche, il présente des fonctionnalités étendues et une ergonomie très avancée, et comporte notamment un écran tactile de grande taille comme ceux qui équipent les téléphones mobiles intelligents. Le dispositif DV1 peut d'ailleurs, dans certains cas, être équipé de circuits de téléphonie mobile et former un téléphone mobile à part entière équipé d'une fonctionnalité de stockage de clés privées.

Dans la pratique, et malgré les indéniables avantages ergonomiques qu'il offre, un tel dispositif DV1 n'est pas à l'abri d'une attaque et ne répond pas aux mêmes exigences rigoureuses de sécurité que les portefeuilles matériels pour le stockage à froid de clés privées, qui n'ont pas de connexion internet et dont le microcontrôleur n'exécute jamais des programmes d'application.

En contrepartie, les portefeuilles matériels pour le stockage à froid de clés privées n'offrent qu'une ergonomie médiocre, rendant certaines transactions peu aisées à conduire, en raison d'un afficheur de faible dimension et l'obligation de prévoir deux boutons pour valider certaines opérations sensibles.

Il pourrait donc être souhaité de perfectionner l'ergonomie des portefeuilles matériels, sans altérer le haut degré de sécurité qu'ils offrent.

Par ailleurs, certains détenteurs de cryptoactifs utilisent plusieurs portefeuilles matériels pour stocker des cryptoactifs de différentes natures ou de différentes valeurs. Un utilisateur peut par exemple utiliser un premier portefeuille matériel dédié à la gestion de comptes de cryptomonnaies de faible valeur pécuniaire, pour réaliser des transactions quotidiennes ou payer des achats, un deuxième portefeuille matériel dédié à la gestion de comptes de cryptomonnaies de forte valeur pécuniaire, un troisième portefeuille matériel dédié à la gestion de cryptoactifs de type jetons non fongibles, etc. Il pourrait donc également être souhaité de perfectionner l'ergonomie des portefeuilles matériels à l'attention d'utilisateurs qui en utilisent plusieurs.

Il pourrait plus généralement être souhaité de prévoir des perfectionnements applicables aux dispositifs électroniques portatifs et notamment aux portefeuilles matériels pour le stockage de clés privées, qui améliorent leur ergonomie, ou qui apportent de nouvelles fonctionnalités, ou encore qui améliorent leurs performances en termes de communication Bluetooth lorsqu'ils sont pourvus de tels moyens de communication.

Concernant l'empilement de dispositifs électroniques, US2019307002A1 décrit un dispositif électronique empilable magnétiquement avec un dispositif similaire, le dispositif étant dépourvu d'écran et comprenant deux aimants sur sa face avant et deux aimants sur sa face arrière. Lors de son empilement avec un dispositif similaire, l'alignement du dispositif avec le dispositif similaire est obtenu de façon mécanique, en faisant coopérer un tampon en caoutchouc en saillie avec une rainure.

De même, US8381994B2 décrit une clé USB empilable magnétiquement avec une clé similaire, comprenant à cet effet un unique aimant. L'alignement de deux clés USB empilées est obtenu par la prévision d'une partie saillante dans une région recevant l'aimant qui coopère avec une ouverture pratiquée dans la même région.

## Revendications

1. Dispositif électronique portatif (HW3) comprenant un écran (TS, 20) agencé sur un châssis (10) en un matériau non magnétique, **caractérisé en ce qu'**il comprend au moins quatre aimants (M1, M2, M3, M4, M3a, M3b, M4a, M4b) agencés de manière à coopérer magnétiquement avec quatre aimants d'au moins un dispositif similaire (HW3-1, HW3-2) afin d'assurer l'empilement magnétique du dispositif (HW3) avec le dispositif similaire quel que soit le dispositif qui se trouve au-dessus de l'autre, et dans lequel les aimants sont agencés de manière dissymétrique relativement à un axe central longitudinal (LL') et/ou relativement à un axe central transversal (TT') du châssis, de manière à former un détrompeur magnétique autorisant un empilement dans lequel les bords du châssis (10) du dispositif sont alignés avec les mêmes bords du dispositif similaire (HW3-1, HW3-2) et dans lequel chaque aimant fait face à l'aimant correspondant du dispositif similaire.

2. Dispositif selon la revendication 1, dans lequel les aimants ont une même orientation magnétique Nord-Sud selon un axe perpendiculaire à un plan du châssis (10).

3. Dispositif électronique portatif selon l'une des revendications 1 et 2, dans lequel chaque aimant (M1, M2, M3, M4, M3a, M3b, M4a, M4b) présente un point central (cmi) situé à une distance longitudinale (11-14) de l'axe central transversal (TT') et à une distance transversale (t1-t4) de l'axe central longitudinal (LL') du châssis, et présentant au moins l'une des caractéristiques suivantes :
- les distances longitudinales (l1-l4) des aimants sont toutes différentes entre elles,
- les distances transversales (t1-t4) des aimants sont toutes différentes entre elles,
- certaines distances longitudinales (l1-l4) sont différentes et certaines distances transversales (t1-t4) sont différentes.

4. Dispositif selon l'une des revendications 1 à 3 dans lequel au moins l'un des aimants (M3, M4) comprend deux aimants superposés (M3a-M3b, M4a-M4b) de même orientation magnétique, le premier (M3a, M4a) des deux aimants superposés étant agencé à proximité d'une face avant (FS) du châssis (10), le deuxième (M3b, M4b) des aimants superposés étant agencé à proximité d'une face arrière (RS) du châssis (10).

5. Dispositif selon la revendication 4, dans lequel le premier (M3a, M4a) des deux aimants superposés est agencé dans un logement (105-3, 105-4) prévu dans une plaque (105) couvrant la face avant (FS) du châssis.

6. Dispositif selon l'une des revendications 1 à 5, comprenant au moins un aimant monobloc (M1, M2) disposé dans un logement (103-1, 103-2) prévu dans le châssis (10), le logement s'étendant sur sensiblement toute l'épaisseur du châssis, et générant un champ magnétique à la fois sur une face avant (FS) et sur une face arrière (RS) du châssis.

7. Dispositif selon l'une des revendications 4 à 6, comprenant :
- au moins un aimant (M3, M4) comprenant deux aimants superposés (M3a-M3b, M4a-M4b) de même orientation magnétique, et
- au moins un aimant monobloc (M1, M2) qui génère un champ magnétique à la fois sur la face avant (FS) et sur la face arrière (RS) du châssis.

8. Dispositif selon l'une des revendications 1 à 7, formant un portefeuille matériel pour le stockage à froid de clés de cryptographie issues de la blockchain et comprenant un microcontrôleur (MCU3) et un élément sécurisé (SE3), l'élément sécurisé étant configuré pour exécuter des programmes d'application sécurisés, le microcontrôleur étant configuré pour assurer l'échange de données entre l'élément sécurisé (SE3) et un dispositif hôte (HDV) sans possibilité pour le dispositif de se connecter directement à l'Internet, le dispositif comprenant un écran tactile (TS, 20) recouvrant la majeure partie d'une face avant (FS) du châssis (10), l'écran tactile étant exclusivement contrôlé par l'élément sécurisé (SE3).

9. Dispositif selon l'une des revendications 1 à 8, comprenant un écran tactile (TS, 20) et des moyens de communication sans fil (BTA, BTM), et configuré pour, lorsqu'il est empilé avec au moins un dispositif similaire (HW3-1, HW3-2) et se trouve en haut de la pile, établir une communication avec le dispositif similaire (HW3-1, HW3-2) présent dans la pile, recevoir des informations fournies par le dispositif similaire et les afficher sur l'écran tactile (TS, 20).

10. Dispositif selon la revendication 9, également configuré pour recevoir via l'écran tactile (TS, 20) des commandes fournies par un utilisateur et les transmettre au dispositif similaire (HW3-1, HW3-2).

11. Dispositif selon l'une des revendications 1 à 10, configuré pour émettre ou recevoir des données dans une bande de fréquences déterminée, et comportant à cet effet une antenne radiofréquence comprenant une combinaison d'une antenne à fente fermée (40, 50) et d'une antenne parasite à fente ouverte (70, 102), les deux antennes étant configurées de manière que :
- lorsque le dispositif est à l'air libre, l'antenne parasite à fente ouverte présente une fréquence d'accord située dans la bande de fréquences déterminée tandis que l'antenne à fente fermée présente une fréquence d'accord située en dehors de la bande de fréquences déterminée, et
- lorsque le dispositif est empilé avec un dispositif similaire (HW3-1, HW3-2), l'antenne à fente fermée présente une fréquence d'accord située dans la bande de fréquences déterminée tandis que l'antenne parasite à fente ouverte présente une fréquence d'accord située en dehors de la bande de fréquences déterminée.

12. Dispositif comprenant un empilement d'au moins deux dispositifs électroniques portatifs (HW3, HW3-1, HW3-2) similaires conformes chacun à l'une des revendications 1 à 11, dans lequel les bords du châssis (10) de chaque dispositif sont alignés avec les mêmes bords du dispositif similaire (HW3-1, HW3-2) et dans lequel chaque aimant fait face à l'aimant correspondant du dispositif similaire.

13. Procédé pour empiler au moins deux dispositifs électroniques portatifs similaires (HW3, HW3-1, HW3-2) comprenant chacun un écran (TS, 20) agencé sur un châssis (10) en un matériau non magnétique, notamment des portefeuilles matériels pour le stockage à froid de clés de cryptographie issues de la blockchain, **caractérisé en ce qu'**il comprend :
- une étape consistant à équiper chaque dispositif d'au moins quatre aimants (M1, M2, M3, M4, M3a, M3b, M4a, M4b) destinés à coopérer magnétiquement avec quatre aimants du dispositif similaire, que celui-ci soit agencé au-dessus ou au-dessous du dispositif considéré, et
- une étape consistant à agencer chaque aimant de manière dissymétrique relativement à un axe central longitudinal (LL') et/ou relativement un axe central transversal (TT') du châssis, de manière à former un détrompeur magnétique autorisant un empilement dans lequel les mêmes bords des châssis (10) des dispositifs sont alignés et dans lequel chaque aimant d'un dispositif fait face à l'aimant correspondant de l'autre dispositif.

14. Procédé selon la des revendication 13, dans lequel les aimants ont une même orientation magnétique Nord-Sud selon un axe perpendiculaire à un plan du châssis (10).

15. Procédé selon l'une des revendications 13 et 14, dans lequel chaque aimant (M1, M2, M3, M4, M3a, M3b, M4a, M4b) présente un point central (cmi) situé à une distance longitudinale (11-14) de l'axe central transversal (TT') et à une distance transversale (t1-t4) de l'axe central longitudinal (LL') du châssis, et chaque dispositif présente au moins l'une des caractéristiques suivantes :
- les distances longitudinales (l1-l4) des aimants sont toutes différentes entre elles,
- les distances transversales (t1-t4) des aimants sont toutes différentes entre elles,
- certaines distances longitudinales (l1-l4) sont différentes et certaines distances transversales (t1-t4) sont différentes.

## Patentansprüche

1. Tragbare elektronische Vorrichtung (HW3), umfassend einen Bildschirm (TS, 20), der auf einem Rahmen (10) aus einem nichtmagnetischen Material angeordnet ist, **dadurch gekennzeichnet, dass** sie mindestens vier Magnete (M1, M2, M3, M4, M3a, M3b, M4a, M4b) umfasst, die so angeordnet sind, dass sie mit vier Magneten mindestens einer ähnlichen Vorrichtung (HW3-1, HW3-2) magnetisch zusammenwirken, um das magnetische Stapeln der Vorrichtung (HW3) mit der ähnlichen Vorrichtung sicherzustellen, unabhängig davon, welche Vorrichtung sich über der anderen befindet, und wobei die Magnete asymmetrisch in Bezug auf eine Längsmittelachse (LL') und/oder in Bezug auf eine Quermittelachse (TT') des Rahmens angeordnet sind, um eine magnetische Unverwechselbarkeitseinrichtung zu bilden, die ein Stapeln zulässt, bei dem die Ränder des Rahmens (10) der Vorrichtung mit denselben Rändern der ähnlichen Vorrichtung (HW3-1, HW3-2) fluchten, und wobei jeder Magnet dem entsprechenden Magneten der ähnlichen Vorrichtung zugewandt ist.

2. Vorrichtung nach Anspruch 1, wobei die Magnete die gleiche magnetische Nord-Süd-Ausrichtung entlang einer Achse senkrecht zu einer Ebene des Rahmens (10) aufweisen.

3. Tragbare elektronische Vorrichtung nach einem der Ansprüche 1 und 2, wobei jeder Magnet (M1, M2, M3, M4, M3a, M3b, M4a, M4b) einen Mittelpunkt (cmi) aufweist, der in einem Längsabstand (l1-l4) von der Quermittelachse (TT') und in einem Querabstand (t1-t4) von der Längsmittelachse (LL') des Rahmens liegt, und mindestens eines der folgenden Merkmale aufweist:
- die Längsabstände (l1-l4) der Magnete sind alle voneinander verschieden,
- die Querabstände (t1-t4) der Magnete sind alle voneinander verschieden,
- bestimmte Längsabstände (l1-l4) sind verschieden und bestimmte Querabstände (t1-t4) sind verschieden.

4. Vorrichtung nach einem der Ansprüche 1 bis 3, wobei mindestens einer der Magnete (M3, M4) zwei übereinander angeordnete Magnete (M3a-M3b, M4a-M4b) mit gleicher magnetischer Ausrichtung umfasst, wobei der erste (M3a, M4a) der beiden übereinander angeordneten Magnete in der Nähe einer Vorderseite (FS) des Rahmens (10) angeordnet ist, wobei der zweite (M3b, M4b) der übereinander angeordneten Magnete in der Nähe einer Rückseite (RS) des Rahmens (10) angeordnet ist.

5. Vorrichtung nach Anspruch 4, wobei der erste (M3a, M4a) der beiden übereinander angeordneten Magnete in einer Aufnahme (105-3, 105-4) angeordnet ist, die in einer Platte (105) vorgesehen ist, welche die Vorderseite (FS) des Rahmens abdeckt.

6. Vorrichtung nach einem der Ansprüche 1 bis 5, umfassend mindestens einen einstückigen Magneten (M1, M2), der in einer im Rahmen (10) vorgesehenen Aufnahme (103-1, 103-2) untergebracht ist, wobei sich die Aufnahme über im Wesentlichen die gesamte Dicke des Rahmens erstreckt, und der ein Magnetfeld sowohl an einer Vorderseite (FS) als auch an einer Rückseite (RS) des Rahmens erzeugt.

7. Vorrichtung nach einem der Ansprüche 4 bis 6, umfassend:
- mindestens einen Magneten (M3, M4), umfassend zwei übereinander angeordnete Magnete (M3a-M3b, M4a-M4b) mit gleicher magnetischer Ausrichtung, und
- mindestens einen einstückigen Magneten (M1, M2), der sowohl auf der Vorderseite (FS) als auch auf der Rückseite (RS) des Rahmens ein Magnetfeld erzeugt.

8. Vorrichtung nach einem der Ansprüche 1 bis 7, die ein Hardware-Wallet für Cold Storage von aus der Blockchain stammenden Kryptographieschlüsseln bildet und einen Mikrocontroller (MCU3) und ein sicheres Element (SE3) umfasst, wobei das sichere Element konfiguriert ist, um sichere Anwendungsprogramme auszuführen, wobei der Mikrocontroller konfiguriert ist, um den Datenaustausch zwischen dem sicheren Element (SE3) und einer Host-Vorrichtung (HDV) sicherzustellen, ohne Möglichkeit für die Vorrichtung, sich direkt mit dem Internet zu verbinden, wobei die Vorrichtung einen Berührungsbildschirm (TS, 20) umfasst, der den größten Teil einer Vorderseite (FS) des Rahmens (10) bedeckt, wobei der Berührungsbildschirm ausschließlich durch das sichere Element (SE3) gesteuert wird.

9. Vorrichtung nach einem der Ansprüche 1 bis 8, umfassend einen Berührungsbildschirm (TS, 20) und drahtlose Kommunikationsmittel (BTA, BTM) und konfiguriert um, wenn sie mit mindestens einer ähnlichen Vorrichtung (HW3-1, HW3-2) gestapelt ist und sich oben auf dem Stapel befindet, eine Kommunikation mit der in dem Stapel vorhandenen ähnlichen Vorrichtung (HW3-1, HW3-2) herzustellen, von der ähnlichen Vorrichtung bereitgestellte Informationen zu empfangen und diese auf dem Berührungsbildschirm (TS, 20) anzuzeigen.

10. Vorrichtung nach Anspruch 9, ferner konfiguriert, um über den Berührungsbildschirm (TS, 20) durch einen Benutzer bereitgestellte Befehle zu empfangen und diese an die ähnliche Vorrichtung (HW3-1, HW3-2) zu übertragen.

11. Vorrichtung nach einem der Ansprüche 1 bis 10, die konfiguriert ist, um Daten in einem bestimmten Frequenzband zu senden oder zu empfangen, und zu diesem Zweck eine Hochfrequenzantenne aufweist, die eine Kombination aus einer geschlossenen Schlitzantenne (40, 50) und einer offenen parasitären Schlitzantenne (70, 102) umfasst, wobei die beiden Antennen konfiguriert sind, sodass:
- wenn die Vorrichtung im Freien ist, die parasitäre offene Schlitzantenne eine Abstimmfrequenz aufweist, die in dem bestimmten Frequenzband liegt, während die geschlossene Schlitzantenne eine Abstimmfrequenz aufweist, die außerhalb des bestimmten Frequenzbandes liegt, und
- wenn die Vorrichtung mit einer ähnlichen Vorrichtung (HW3-1, HW3-2) gestapelt ist, die geschlossene Schlitzantenne eine Abstimmfrequenz aufweist, die in dem bestimmten Frequenzband liegt, während die offene parasitäre Schlitzantenne eine Abstimmfrequenz aufweist, die außerhalb des bestimmten Frequenzbandes liegt.

12. Vorrichtung, umfassend einen Stapel von mindestens zwei ähnlichen tragbaren elektronischen Vorrichtungen (HW3, HW3-1, HW3-2) jeweils nach einem der Ansprüche 1 bis 11, wobei die Ränder des Rahmens (10) jeder Vorrichtung mit den gleichen Rändern der ähnlichen Vorrichtung (HW3-1, HW3-2) fluchten und wobei jeder Magnet dem entsprechenden Magneten der ähnlichen Vorrichtung zugewandt ist.

13. Verfahren zum Stapeln von mindestens zwei ähnlichen tragbaren elektronischen Vorrichtungen (HW3, HW3-1, HW3-2), die jeweils einen Bildschirm (TS, 20) umfassen, der auf einem Rahmen (10) aus einem nichtmagnetischen Material angeordnet ist, insbesondere Hardware-Wallets für Cold Storage von aus der Blockchain stammenden Kryptographieschlüsseln, **dadurch gekennzeichnet, dass** es umfasst:
- einen Schritt, der darin besteht, jede Vorrichtung mit mindestens vier Magneten (M1, M2, M3, M4, M3a, M3b, M4a, M4b) auszustatten, die dazu bestimmt sind, magnetisch mit vier Magneten der ähnlichen Vorrichtung zusammenzuwirken, unabhängig davon, ob diese über oder unter der betrachteten Vorrichtung angeordnet ist, und
- einen Schritt, der darin besteht, jeden Magneten asymmetrisch in Bezug auf eine Längsmittelachse (LL') und/oder in Bezug auf eine Quermittelachse (TT') des Rahmens anzuordnen, um eine magnetische Unverwechselbarkeitseinrichtung zu bilden, die eine Stapelung zulässt, bei der die gleichen Ränder der Rahmen (10) der Vorrichtungen fluchten und bei der jeder Magnet einer Vorrichtung dem entsprechenden Magneten der anderen Vorrichtung zugewandt ist.

14. Verfahren nach Anspruch 13, wobei die Magnete die gleiche magnetische Nord-Süd-Ausrichtung entlang einer Achse senkrecht zu einer Ebene des Rahmens (10) aufweisen.

15. Verfahren nach einem der Ansprüche 13 und 14, wobei jeder Magnet (M1, M2, M3, M4, M3a, M3b, M4a, M4b) einen Mittelpunkt (cmi) aufweist, der in einem Längsabstand (l1-l4) von der Quermittelachse (TT') und in einem Querabstand (t1-t4) von der Längsmittelachse (LL') des Rahmens angeordnet ist, und jede Vorrichtung mindestens eines der folgenden Merkmale aufweist:
- die Längsabstände (l1-l4) der Magnete sind alle voneinander verschieden,
- die Querabstände (t1-t4) der Magnete sind alle voneinander verschieden,
- bestimmte Längsabstände (l1-l4) sind verschieden und bestimmte Querabstände (t1-t4) sind verschieden.

## Claims

1. A portable electronic device (HW3) comprising a display (TS, 20) arranged on a chassis (10) of a non-magnetic material, **characterized in that** it comprises at least four magnets (M1, M2, M3, M4, M3a, M3b, M4a, M4b) arranged to magnetically cooperate with four magnets of at least one similar device (HW3-1, HW3-2) in order to ensure the magnetic stacking of the device (HW3) with the similar device regardless of the device that is on top of the other, and wherein the magnets are arranged asymmetrically relative to a longitudinal center axis (LL') and/or relative to a transverse center axis (TT') of the chassis, to form a magnetic key permitting a stacking in which the edges of the chassis (10) of the device are aligned with the same edges of the similar device (HW3-1, HW3-2) and wherein each magnet faces the corresponding magnet of the similar device.

2. The device of claim 1, wherein the magnets have the same north-south magnetic orientation along an axis perpendicular to a plane of the chassis (10).

3. The portable electronic device according to one of claims 1 and 2, wherein each magnet (M1, M2, M3, M4, M3a, M3b, M4a, M4b) has a center point (cmi) located at a longitudinal distance (l1-l4) from the transverse center axis (TT') and at a transverse distance (t1-t4) from the longitudinal center axis (LL') of the frame, and having at least one of the following characteristics:
- the longitudinal distances (l1-l4) of the magnets are all different from each other,
- the transverse distances (t1-t4) of the magnets are all different from each other,
- some longitudinal distances (l1-l4) are different and some transverse distances (t1-t4) are different.

4. The device according to any one of claims 1 to 3 wherein at least one of the magnets (M3, M4) comprises two superimposed magnets (M3a-M3b, M4aM4b) of the same magnetic orientation, the first (M3a, M4a) of the two superimposed magnets being arranged in the vicinity of a front side (FS) of the chassis (10), the second (M3b, M4b) of the superimposed magnets being arranged in the vicinity of a rear side (RS) of the chassis (10).

5. The device of claim 4, wherein the first (M3a, M4a) of the two superimposed magnets is arranged in a recess (105-3, 105-4) provided in a plate (105) covering the front side (FS) of the chassis.

6. The device according to one of claims 1 to 5, comprising at least one single-piece magnet (M1, M2) placed in a recess (103-1, 103-2) provided in the chassis (10), the recess extending approximately through the entire thickness of the chassis, and generating a magnetic field on both a front side (FS) and a rear side (RS) of the chassis.

7. The device according to one of claims 4 to 6, comprising:
- at least one magnet (M3, M4) comprising two superimposed magnets (M3a-M3b, M4a-M4b) of same magnetic orientation, and
- at least one single-piece magnet (M1, M2) that generates a magnetic field on both the front (FS) and the rear (RS) side of the chassis.

8. The device according to any one of claims 1 to 7, forming a hardware wallet for the cold storage of cryptographic keys from the blockchain and comprising a microcontroller (MCU3) and a secure element (SE3), wherein the secure element is configured to execute secure application programs, the microcontroller being configured to ensure the exchange of data between the secure element (SE3) and a host device (HDV) without the ability for the device to connect directly to the Internet, wherein the device comprises a touch screen (TS, 20) covering most of a front side (FS) of the chassis (10), the touch screen being controlled exclusively by the secure element (SE3).

9. The device according to any one of claims 1 to 8, comprising a touch screen (TS, 20) and wireless means of communication (BTA, BTM), and configured to, when stacked with at least one similar device (HW3-1, HW3-2) and located at the top of the stack, establish communication with the similar device (HW3-1, HW3-2) present in the stack, receive information from the similar device and display it on the touch screen (TS, 20).

10. The device according to claim 9, also configured to receive user-supplied commands via the touch screen (TS, 20) and transmit them to the similar device (HW3-1, HW3-2).

11. The device according to any one of claims 1 to 10, configured to transmit or receive data in a given frequency band, and comprising for this purpose a radio frequency antenna comprising a combination of a closed-slot antenna (40, 50) and an open-slot parasitic antenna (70, 102), both antennas being configured so that:
- when the device is in the open air, the open-slot parasitic antenna has a tuning frequency within the specified frequency band while the closed-slot antenna has a tuning frequency outside the specified frequency band, and
- when the device is stacked with a similar device (HW3-1, HW3-2), the closed-slot antenna has a tuning frequency within the specified frequency band while the open-slot parasitic antenna has a tuning frequency outside the specified frequency band.

12. A device comprising a stack of at least two similar hand-held electronic devices (HW3, HW3-1, HW3-2), each of which conforms to one of claims 1 to 11, wherein the edges of the chassis (10) of each device are aligned with the same edges of the similar device (HW3-1, HW3-2) and wherein each magnet faces the corresponding magnet of the similar device.

13. A method for stacking at least two similar handheld electronic devices (HW3, HW3-1, HW3-2) each comprising a screen (TS, 20) arranged on a chassis (10) made of a non-magnetic material, in particular hardware wallets for the cold storage of cryptographic keys from the blockchain, **characterized in that** it comprises:
- a step of fitting each device with at least four magnets (M1, M2, M3, M4, M3a, M3b, M4a, M4b) designed to cooperate magnetically with four magnets of the similar device, whether the device is arranged above or below the considered device, and
- a step of arranging each magnet asymmetrically relative to a longitudinal center axis (LL') and/or relative to a transverse center axis (TT') of the chassis, to form a magnetic keying allowing a stack in which the same edges of the chassis (10) of the devices are aligned and in which each magnet of one device faces the corresponding magnet of the other device.

14. The method according to claim 13, wherein the magnets have the same north-south magnetic orientation along an axis perpendicular to a plane of the chassis (10).

15. The method according to any one of claims 13 and 14, wherein each magnet (M1, M2, M3, M4, M3a, M3b, M4a, M4b) has a central point (cmi) located at a longitudinal distance (l1-l4) from the transverse center axis (TT') and at a transverse distance (t1-t4) from the longitudinal center axis (LL') of the chassis, and each device has at least one of the following characteristics:
- the longitudinal distances (l1-l4) of the magnets are all different from each other,
- the transverse distances (t1-t4) of the magnets are all different from each other,
- some longitudinal distances (l1-l4) are different and some transverse distances (T1-T4) are different.
